# EUROPÄISCHE PATENTSCHRIFT

(11) **EP 0 846 530 B1**
(45) Veröffentlichungstag und Bekanntmachung des Hinweises auf die Patenterteilung: **12.12.2001**
(21) Anmeldenummer: 97117123.6
(22) Anmeldetag: 02.10.1997
(51) Int. Cl.: B25J 15/02

(54) **Greifvorrichtung**
Gripper
Pince de préhension

(30) Priorität: 05.12.1996 DE 19650431
(43) Veröffentlichungstag der Anmeldung: 10.06.1998
(73) Patentinhaber: Schunk GmbH & Co. KG Fabrik für Spann- und Greifwerkzeuge, 74348 Lauffen (DE)
(72) Erfinder: Übele, André, 71546 Aspach (DE); Franz, Michael, 74360 Ilsfeld (DE)
(74) Vertreter: Dreiss, Fuhlendorf, Steimle & Becker

(56) Entgegenhaltungen:
- EP-A- 0 162 439
- DE-A- 3 806 150
- US-A- 4 336 926

## Beschreibung

Die Erfindung betrifft eine Greifvorrichtung mit einem Gehäusekörper und mit wenigstens zwei in Öffnungs- bzw. Schließrichtung synchronisiert bewegbaren Greiferfingern, wobei sich von einem gehäusefesten Mittelteil in Hubrichtung in voneinander wegweisenden Richtungen je eine feststehende Steuerstange wegerstreckt.

Eine derartige Greifvorrichtung ist z.B. Aus DE-A-38 06 150 bekannt. Bei dieser greifvorrichtung werden Zylinderkammern von einem hülsenförmigen Abschnitt der Greiferfinger gebildet. Die Druckmittelzufuhr bzw. -abfuhr erfolgt über zusätzliche gehäusefeste Komponenten, die in Hubrichtung außerhalb der Greiferfinger angeordnet sind. Die Anordnung ist aufwendig und erfordert einen großen Bauraum.

Nach der EP 0 532 174 A1 sind die Greiferfinger über im Gehäusekörper verschiebliche Stangen, welche auch eine Synchronisation bewirken, geführt und durch Kolbenstangen, welche in Zylinderräume in den Gehäusekörper eingreifen hin- und herbewegbar. Der Hub verglichen mit dem Bauraum der Greifvorrichtung ist gering.

Desweiteren sind Greifvorrichtungen bekannt geworten, bei denen die Greiferfinger über nebeneinander angeordnete verschiebliche Grundbacken auseinander bzw. aufeinanderzu bewegt werden. Dies erweist sich insoweit als nachteilig, als bei den Greiferfingern abgewinkelte Endabschnitte vorgesehen werden müssen, wenn ihre Greifbereiche miteinander fluchten sollen.

Der vorliegenden Erfindung liegt daher die Aufgabe zugrunde, eine Greifvorrichtung der eingangs genannten Art so zu verbessern, dass sie kostengünstiger herstellbar ist und einen geringeren Bauraum aufweist, so dass die Vorrichtung insgesamt kompakter erscheint.

Diese Aufgabe wird durch eine Greifvorrichtung der genannten Art gelöst die dadurch gekennzeichnet ist, dass sich die Steuerstange in eine bodenseitig geschlossene Ausnehmung eines jeweiligen Greiferfingers hineinerstreckt und dass die bodenseitig geschlossene Ausnehmung einen ersten bodenseitigen Zylinderraum und einen zweiten die Steuerstange umgebenden Zylinderraum am Außenumfang der Steuerstange bildet, und dass der erste bodenseitige Zylinderraum gegen den zweiten Zylinderraum durch ein am freien Ende der Steuerstange feststehendes erstes Dichtungselement und der zweite Zylinderraum mittels eines zweiten mit dem Greiferfinger bewegbaren Dichtungselements gegen die Öffnung der Ausnehmung abgedichtet ist, und dass die Steuerstange einen ersten in ihrer Längsrichtung verlaufenden Kanal aufweist, der zum Einleiten eines strömbaren Steuermediums in den ersten Zylinderraum mündet, und einen zweiten in ihrer Längsrichtung verlaufenden Kanal aufweist, der in Richtung auf das freie Ende der Steuerstange vor dem ersten Dichtungselement in den zweiten Zylinderraum mündet.

Durch diese erfindungsgemäße Ausbildung lässt sich das Greiferraumvolumen im Verhältnis zum Arbeitshub der Greifvorrichtung erheblich reduzieren, und die Vorrichtung kann symmetrischer ausgebildet werden, was sich in herstellungstechnischer Hinsicht als vorteilhaft erweist. Durch das gehäusefeste Mittelteil, von dem die beim Betrieb der Vorrichtung auftretenden Kräfte aufgenommen werden, werden auch die kinematischen Eigenschaften der Greifvorrichtung verbessert. Die übrigen Bauteile werden weniger stark oder überhaupt nicht belastet und können dementsprechend mit geringerer Wandstärke ausgebildet werden.

Zum Öffnen der Greiferfinger wird in den Zylinderraum zwischen der Stirnseite einer jeweiligen Steuerstange und dem Boden der Ausnehmung in dem Greiferfinger ein strömbares Medium eingeleitet, um den Greiferfinger bezüglich der Steuerstange zu bewegen. Hierfür weist die Steuerstange einen in ihrer Längsrichtung verlaufenden Kanal auf, um das strömbare Medium in den durch das Dichtungselement abgedichteten Zylinderraum einzuleiten.

Es erweist sich als vorteilhaft, wenn das zweite Dichtungselement durch ein Sicherungselement im Öffnungsbereich der Ausnehmung des jeweiligen Greiferfingers gehalten ist.

Die Steuerstange weist einen zweiten, in ihrer Längsrichtung verlaufenden Kanal auf, der in Richtung auf das freie Ende der Steuerstange vor dem Dichtungselement radial nach außen in den zweiten Zylinderraum mündet. Dieser Kanal bzw. das darin enthaltene strömbare pneumatische oder hydraulische Medium wird dann zum Schließen der Greiferfinger mit Druck beaufschlagt, und der andere Kanal wird drucklos gestellt, so dass der jeweilige Greiferfinger auf die jeweilige Steuerstange aufschiebbar ist.

Die Greifvorrichtung kann in vorteilhafter Weise eine die Steuerstangen und die auf den Steuerstangen verschieblichen Bereiche der Greiferfinger überfangende Abdeckung aufweisen, die an dem gehäusefesten Mittelteil festlegbar ist. Die Abdeckung lässt sich vorzugsweise leicht lösen und anbringen und verleiht der Vorrichtung eine kompakte Erscheinungsform.

In Weiterbildung dieses Erfindungsgedankens liegt die Abdeckung mit ihren gegenüberliegenden Stirnseiten gegen die Halteabschnitte der Greiferfinger an, wenn die Greifvorrichtung geschlossen ist, also die Greiferfinger in ihrer aufeinanderzubewegten Stellung sind.

Es hat sich desweiteren als vorteilhaft erwiesen, wenn die Greiferfinger in ihrer geschlossenen Position mit ihren einanderzugewandten Stirnseiten gegen das gehäusefeste Mittelteil anliegen. Hierdurch wird eine eindeutige Referenzposition geschaffen.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Parallelgreifers. In der Zeichnung zeigt:
- Figur 1: eine perspektivische Ansicht eines erfindungsgemäßen Parallelgreifers;
- Figur 2: einen Längsschnitt entlang der Hubrichtung des Greifers nach Figur 1 in seiner geschlossenen Stellung;
- Figur 3: einen Längsschnitt des Greifers nach Figur 1 in seiner geöffneten Stellung;
- Figur 4: einen Schnitt entlang der Linie IV-IV; und
- Figur 5: eine Draufsicht auf den Gehäusegrundkörper nach Figur 1 mit angedeuteten Mitnehmerelementen.

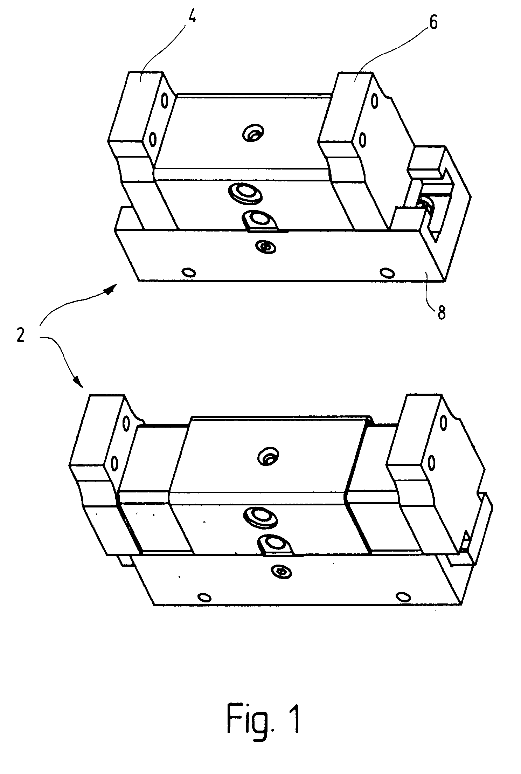

Figur 1 zeigt eine insgesamt mit dem Bezugzeichen 2 bezeichnete Parallelgreifvorrichtung in einer geschlossenen Greifstellung und in einer geöffneten Lösestellung, in der die beiden Greiferfinger 4, 6 weiter voneinander beabstandet sind als in der Greifstellung.

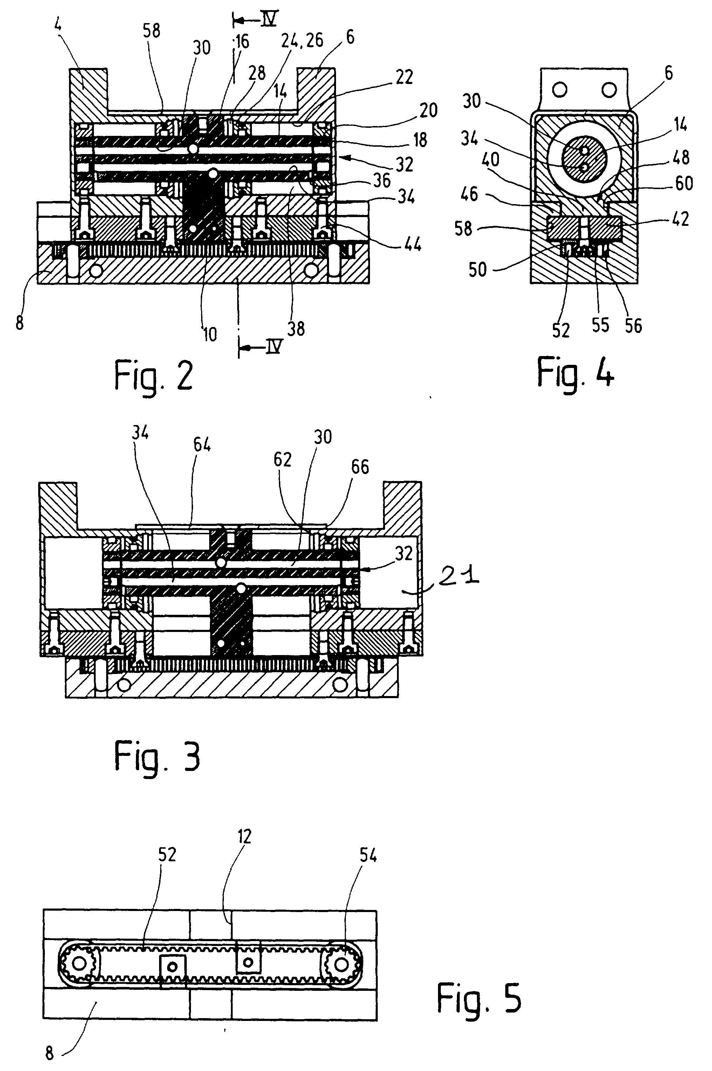

Die Vorrichtung umfasst, wie auch aus den Schnittansichten der Figuren 2 bis 4 und Figur 5 ersichtlich ist, einen Gehäusegrundkörper 8 und ein an dem Grundkörper 8 festgelegtes Gehäusemittelteil 10, welches in eine quer zur Hubrichtung der Greifvorrichtung vorgesehene Aussparung 12 (Figur 5) im Gehäusegrundkörper 8 eingesetzt ist. Von dem Mittelteil 10 erstreckt sich in Hubrichtung zu beiden Seiten hin eine feststehende Steuerstange 14, die in bevorzugter Weise aus einem einzigen stangenförmigen Bauteil gefertigt und in eine in Hubrichtung verlaufende Durchstecköffnung 16 in dem Mittelteil 10 hindurch geführt ist. An dem jeweiligen freien Ende 18 der Steuerstange 14 ist ein feststehendes kolbenartiges Dichtungselement 20 vorgesehen. Um die jeweilige Steuerstange 14 herum ist ein Greiferfinger 4, 6 verschieblich angeordnet. Jeder Greiferfinger 4, 6 weist eine einen Zylinderraum 21 bildende Ausnehmung 22 auf, in welche die Steuerstange 14 mit ihrem Dichtungselement 20 eingreift. Dabei liegt das Dichtungselement 20 dichtend gegen die Wandung der Ausnehmung 22 an. Am freien Öffnungsende 24 der Greiferfinger 4, 6 ist ein zweites Dichtelement 26 vorgesehen, welches über ein sprengringförmiges Sicherungselement 28 an dem jeweiligen Greiferfinger 6 gehalten und mit diesem gegenüber der Steuerstange 14 bewegbar ist. In Längsrichtung der Steuerstange 14 verläuft ein Kanal 30, der an der Stirnseite 32 der Steuerstange 14 und damit in den Zylinderraum 21 mündet und an eine in der Zeichnung nicht dargestellte Vorrichtung zur Erzeugung pneumatischen oder hydraulischen Drucks anschließbar ist.

Parallel zu dem Kanal 30 verläuft in der Steuerstange 14 ein zweiter Kanal 34, der jedoch an der Stirnseite 32 verschlossen wurde und stattdessen über eine radiale Öffnung 36 in einen zweiten Zylinderraum 38 mündet. Die Öffnung ist in Richtung auf das freie Ende 18 der Steuerstange 14 vor dem Dichtungselement 20 vorgesehen. Der zweite Zylinderraum 38 ist von einem Ringraum zwischen der Steuerstange 14 und der Begrenzung der Ausnehmung 22 des Greiferfingers 6 gebildet, und in Längsrichtung von dem ersten Dichtungselement 20 und dem zweiten Dichtungselement 26 begrenzt.

Auf der dem Gehäusegrundkörper 8 zugewandten Seite weisen die Greiferfinger 4, 6 einen blockartigen Vorsprung 40 auf, an dessen Stirnseite ein gegenüber dem Vorsprung 4 breiteres quaderförmiges Gleitstück 42 aus einem Gleitmaterial mittels Schrauben 44 lösbar angebracht ist, so dass hierdurch eine Hinterschneidung 46 gebildet ist. Wie aus der Figur 4 ersichtlich, ist in dem Gehäusegrundkörper 8 eine in Längsrichtung verlaufende T-förmige Nut 48 ausgebildet, die von dem Gleitstück 42 hintergriffen wird, wobei eine Führung für einen jeweiligen Greiferfinger 4, 6 ausgebildet wird.

An der vom jeweiligen Greiferfinger 4, 6 abgewandten Seite des Gleitstücks 42 ist ein Mitnehmerelement 50 vorgesehen, welches sich in Richtung auf den Grund der in Längsrichtung verlaufenden Nut 48 erstreckt und, wie aus der Figur 5 ersichtlich ist, mit einem Zahnriemen 52 in Antriebsverbindung steht. Der Zahnriemen 52 ist geschlossen und über zwei gezahnte Riemenscheiben 54 geführt. Dabei ist das jeweilige Mitnehmerelement 50 der beiden Greiferfingerseiten mit gegenüberliegenden Abschnitten des Zahnriemens 52 verbunden, so dass eine synchrone gegenläufige Kopplung zwischen den beiden Greiferfingern 4, 6 erreicht wird.

Wie aus den Figuren 4 und 5 ersichtlich ist, weist die Nut 48 einen verengten, den Nutgrund 55 bildenden Abschnitt 56 auf. Der Abschnitt 56 geht über in einen erweiterten Abschnitt 58, in welchem das Gleitstück 42 aufgenommen ist. Ein demgegenüber wiederum verengter, zu den Greiferfingern offener Nutabschnitt 60 nimmt den blockartigen Vorsprung 40 der Greiferfinger 4, 6 auf. Der Zahnriemen 52 sowie die gezahnten Riemenscheiben 54 sind in dem verengten, den Nutgrund 55 bildenden Abschnitt 56 untergebracht.

Zum Öffnen bzw. Auseinanderbewegen der Greiferfinger 4, 6 wird der Kanal 30 mit Druckluft beaufschlagt, die an der Stirnseite 32 der Steuerstange 14 in den Zylinderraum (21) gelangt und an dem jeweiligen Greiferfinger 4, 6 Arbeit verrichtet, indem dieser nach außen gedrückt wird und damit das Volumen des Zylinderraums zunimmt. Hierbei verschiebt sich der jeweilige Greiferfinger 4, 6 mit angefügtem Gleitstück 42 bezüglich des Gehäusegrundkörpers 8 und der Zahnriemen 52 wird in der Darstellung nach Figur 5 im Uhrzeigersinn bewegt. Durch diese Zwangsführung ist die Öffnungs- bzw. Schließbewegung der beiden Greiferfinger 4, 6 exakt synchron zueinander. Es kommt nicht zum Klemmen einzelner Bauteile und die hierbei auftretende Reibung ist zu vernachlässigen.

Um die Greiferfinger 4, 6 wieder aufeinander zu zu bewegen, wird über eine geeignete Steuerung der Druck vom Kanal 30 weggenommen, und der Kanal 34 wird beaufschlagt. Das strömbare Medium gelangt nun über die radiale Öffnung 36 in den zweiten Zylinderraum 38 und verdrängt das kolbenartige Dichtungselement 26, wodurch die Greiferfinger 4, 6 in ihre Schließstellung bewegt werden, und das Volumen des zweiten Zylinderraums 38 zunimmt.

Eine Referenzposition für die Schließstellung der beiden Greiferfinger 4, 6 ist dadurch gegeben, dass ihre einander zugewandten Stirnseiten 62 in der Schließstellung gegen das Mittelteil 10 anliegen. Eine Abdeckung 64 verhältnismäßig geringer Wandstärke überfängt das Mittelteil 10 und liegt mit ihren Stirnseiten 66 gegen die Halteabschnitte der Greiferfinger 4, 6 an, wenn diese in ihrer geschlossenen Stellung sind.

## Patentansprüche

1. Greifvorrichtung mit einem Gehäusekörper (8) und mit wenigstens zwei in Öffnungs- bzw. Schließrichtung synchronisiert bewegbaren Greiferfingern (4, 6), wobei sich von einem gehäusefesten Mittelteil (10) in Hubrichtung in voneinander wegweisenden Richtungen je eine feststehende Steuerstange (14) wegerstreckt, **dadurch gekennzeichnet, dass** sich die Steuerstange (14) in eine bodenseitig geschlossene Ausnehmung (22) eines jeweiligen Greiferfingers (4, 6) hineinerstreckt und dass die bodenseitig geschlossene Ausnehmung (22) einen ersten bodenseitigen Zylinderraum (21) und einen zweiten die Steuerstange (14) umgebenden Zylinderraum (38) am Außenumfang der Steuerstange (14) bildet, und dass der erste bodenseitige Zylinderraum (21) gegen den zweiten Zylinderraum (38) durch ein am freien Ende (18) der Steuerstange (14) feststehendes erstes Dichtungselement (20) und der zweite Zylinderraum (38) mittels eines zweiten mit dem Greiferfinger bewegbaren Dichtungselements (26) gegen die Öffnung der Ausnehmung (22) abgedichtet ist, und dass die Steuerstange (14) einen ersten in ihrer Längsrichtung verlaufenden Kanal (30) aufweist, der zum Einleiten eines strömbaren Steuermediums in den ersten Zylinderraum (21) mündet, und einen zweiten in ihrer Längsrichtung verlaufenden Kanal (34) aufweist, der in Richtung auf das freie Ende (18) der Steuerstange (14) vor dem ersten Dichtungselement (20) in den zweiten Zylinderraum (38) mündet.

2. Greifvorrichtung nach Anspruch 1, **dadurch gekennzeichnet, dass** in dem gehäusefesten Mittelteil (10) eine Öffnung (16) vorgesehen ist, durch welche ein einziges stangenförmiges Bauteil hindurchgesteckt ist, welches die sich in entgegengesetzten Richtungen erstreckenden Steuerstangen (14) bildet.

3. Greifvorrichtung nach Anspruch 1 oder 2, **dadurch gekennzeichnet, dass** das zweite Dichtungselement (26) durch ein Sicherungselement (28) im Öffnungsbereich (24) der Ausnehmung (22) des jeweiligen Greiferfingers (4, 6) gehalten und somit mit dem Greiferfinger (4, 6) gegenüber der Steuerstange (14) bewegbar ist.

4. Greifvorrichtung nach wenigstens einem der vorstehenden Ansprüche, **gekennzeichnet durch** eine die Steuerstangen (14) überfangende Abdeckung (64), die an dem gehäusefesten Mittelteil (10) festlegbar ist.

5. Greifvorrichtung nach Anspruch 4, **dadurch gekennzeichnet, dass** die Abdeckung (64) mit ihren gegenüberliegenden Stirnseiten (66) gegen die Halteabschnitte der Greiferfinger (4, 6) anliegt, wenn die Greifervorrichtung geschlossen ist.

6. Greifvorrichtung nach wenigstens einem der vorstehenden Ansprüche, **dadurch gekennzeichnet, dass** die Greiferfinger (4, 6) in ihrer geschlossenen Position mit ihren einander zugewandten Stirnseiten gegen das gehäusefeste Mittelteil (10) anliegen.

7. Greifvorrichtung nach wenigstens einem der vorstehenden Ansprüche, **dadurch gekennzeichnet, dass** auf der von ihrem Halteabschnitt abgewandten und damit werkstückabgewandten Seite der Greiferfinger (4, 6) ein einen Hinterschnitt bildender Gleitkörper (42) angebracht ist, der in Hubrichtung verschieblich in dem Gehäusekörper (8) geführt ist.

8. Greifvorrichtung nach wenigstens einem der vorstehenden Ansprüche, **dadurch gekennzeichnet, dass** zur Synchronisation der Bewegung der Greiferfinger (4, 6) eine Zahnriemenkopplung vorgesehen ist.

9. Greifvorrichtung nach Anspruch 8, **dadurch gekennzeichnet, dass** die Zahnriemenkopplung einen geschlossenen Zahnriemen (52) und zwei gezahnte Riemenscheiben (54) umfasst.

10. Greifvorrichtung nach Anspruch 8 oder 9, **dadurch gekennzeichnet, dass** die Greiferfinger (4, 6) auf ihrer gehäusezugewandten Seite je ein Mitnehmerelement (50) aufweisen, welches den jeweiligen Greiferfinger mit dem Zahnriemen (52) koppelt.

## Claims

1. A gripping apparatus comprising a housing body (8) and at least two gripper fingers (4, 6) which are synchronisedly movable in the opening and closing directions, wherein a respective stationary control bar (14) extends in the stroke direction from a central portion (10) which is fixed with respect to the housing in mutually oppositely facing directions, **characterised in that** the control bar (14) extends into a recess (22) which is closed at its bottom in a respective gripper finger (4, 6) and that the recess (22) which is closed at its bottom forms a first bottom cylinder chamber (21) and a second cylinder chamber (38) surrounding the control bar (14) at the outside periphery of the control bar (14), and that the first bottom cylinder chamber (21) is sealed off relative to the second cylinder chamber (38) by a first sealing element (20) which is fixed at the free end (18) of the control bar (14) and the second cylinder chamber (38) is sealed off relative to the opening of the recess (22) by means of a second sealing element (26) which is movable with the gripper finger, and that the control bar (14) has a first passage (30) which extends in its longitudinal direction and which opens into the first cylinder chamber (21) for the introduction of a control medium which is capable of flow, and a second passage (34) which extends in its longitudinal direction and which opens into the second cylinder chamber (38) upstream of the first sealing element (20) in a direction towards the free end (18) of the control bar (14).

2. A gripping apparatus according to claim 1 **characterised in that** provided in the central portion (10) which is fixed with respect to the housing is an opening (16) through which is passed a single bar-shaped component which forms the control bars (14) which extend in opposite directions.

3. A gripping apparatus according to claim 1 or claim 2 **characterised in that** the second sealing element (26) is held by a securing element (28) in the opening region (24) of the recess (22) of the respective gripper finger (4, 6) and is thus movable with the gripper finger (4, 6) with respect to the control bar (14).

4. A gripping apparatus according to at least one of the preceding claims **characterised by** a cover (64) which extends over the control bars (14) and which can be fixed to the central portion (10) which is fixed with respect to the housing.

5. A gripping apparatus according to claim 4 **characterised in that** the cover (64) bears with its oppositely disposed ends (66) against the holding portions of the gripper fingers (4, 6) when the gripping apparatus is closed.

6. A gripping apparatus according to at least one of the preceding claims **characterised in that** in their closed position the gripper fingers (4, 6) bear with their mutually facing ends against the central portion (10) which is fixed with respect to the housing.

7. A gripping apparatus according to at least one of the preceding claims **characterised in that** provided on the side of the gripper fingers (4, 6), which is remote from the holding portion thereof and which is thus remote from the workpiece, is a sliding body (42) which forms an undercut configuration and which is guided slidably in the stroke direction in the housing body (8).

8. A gripping apparatus according to at least one of the preceding claims **characterised in that** a toothed belt coupling is provided for synchronisation of the movement of the gripper fingers (4, 6).

9. A gripping apparatus according to claim 8 **characterised in that** the toothed belt coupling includes a closed toothed belt (52) and two toothed pulleys (54).

10. A gripping apparatus according to claim 8 or claim 9 **characterised in that** the gripper fingers (4, 6), on their side towards the housing, each have a respective entrainment element (50) which couples the respective gripper finger to the toothed belt (52).

## Revendications

1. Dispositif de préhension avec un corps de boîtier (8) et avec au moins deux doigts à griffes (4, 6) mobiles de façon synchronisée dans le sens d'ouverture et le sens de fermeture, une tige de commande (14) fixe s'étendant en s'éloignant d'une partie centrale (10) fixée au boîtier dans le sens de levage dans des directions divergentes l'une de l'autre, **caractérisé en ce que** la tige commande (14) s'étend dans un évidement (22) fermé côté fonds d'un doigt à griffes (4, 6) respectif et **en ce que** l'évidement (22) fermé côté fond forme une première chambre de vérin (21) côté fonds et une deuxième chambre de vérin (38) entourant la tige de commande (14) sur le pourtour extérieur de la tige de commande (14), et **en ce que** la première chambre de vérin (21) côté fond est rendue étanche par rapport à la deuxième chambre de vérin (38) par un élément d'étanchéité (20) fixe sur l'extrémité libre (18) de la tige de commande (14) et la deuxième chambre de vérin (38) est rendu étanche par rapport à l'ouverture de l'évidement (22) au moyen d'un deuxième élément d'étanchéité (26) mobile avec le doigt à griffes, et **en ce que** la tige de commande (14) présente un premier canal (30) allant dans sa direction longitudinale, qui débouche dans la première chambre de vérins (21) pour l'introduction d'un agent de commande qui peut s'écouler, et un deuxième canal (34) allant dans sa direction longitudinale, qui débouche dans la deuxième chambre de vérin (38) en direction de l'extrémité libre (18) de la tige de commande (14) avant le premier élément d'étanchéité (20).

2. Dispositif de préhension selon la revendication 1, **caractérisé en ce qu'**il est prévu dans la partie centrale (10) fixée au boîtier une ouverture (16) par laquelle est passé un unique élément de construction en forme de tige, que forment les tiges de commande (14) qui s'étendent dans la direction opposée.

3. Dispositif de préhension selon la revendication 1 ou 2, **caractérisé en ce que** le deuxième élément d'étanchéité (26) est maintenu par un élément de sécurité (28) dans la zone d'ouverture (24) de l'évidement (22) du doigt à griffes respectif (4, 6) et est donc mobile avec le doigt à griffes (4, 6) par rapport à la tige de commande (14).

4. Dispositif de préhension selon au moins l'une quelconque des revendications précédentes, **caractérisé par** un revêtement (64) recouvrant les tiges de commande (14), qui peut être fixé sur la partie centrale (10) fixée au boîtier.

5. Dispositif de préhension selon la revendication 4, **caractérisé en ce que** le revêtement (64) vient s'appuyer avec ses faces frontales (66) situées en regard contre les parties de maintien des doigts à griffes (4, 6), lorsque le dispositif de préhension est fermé.

6. Dispositif de préhension selon au moins l'une quelconque des revendications précédentes, **caractérisé en ce que** les doigts à griffes (4, 6) s'appuient dans leur position fermée avec leurs faces frontales tournées les unes vers les autres contre la partie centrale (10) fixée au boîtier.

7. Dispositif de préhension selon au moins l'une quelconque des revendications précédentes, **caractérisé en ce que**, sur le côté des doigts à griffes (4, 6) qui est opposé à sa partie de maintien et est donc opposé à la pièce, est disposé un corps coulissant (42) formant une contre-dépouille qui est guidé dans le corps de boîtier (8) de façon coulissante dans le sens de levage.

8. Dispositif de préhension selon au moins l'une quelconque des revendications précédentes, **caractérisé en ce qu'**un accouplement par courroie crantée est prévu pour la synchronisation du mouvement des doigts à griffes (4, 6).

9. Dispositif de préhension selon la revendication 8, **caractérisé en ce que** l'accouplement par courroie dentée comprend une courroie dentée (52) fermée et deux poulies à courroie (54) dentées.

10. Dispositif de préhension selon la revendication 8 ou 9, **caractérisé en ce que** les doigts à griffes (4, 6) présentent sur ce côté tourné vers le boîtier un élément d'entraînement (50), lequel couple le doigt à griffes concerné avec la courroie dentée (52).
